# EUROPÄISCHE PATENTSCHRIFT

(11) **EP 1 361 079 B1**
(45) Veröffentlichungstag und Bekanntmachung des Hinweises auf die Patenterteilung: **27.06.2012**
(21) Anmeldenummer: 02010528.4
(22) Anmeldetag: 10.05.2002
(51) Int. Cl.: B60C 23/04

(54) **Verfahren und Vorrichtung zur Überwachung des Druckes in einem Reifen**
Method and device for monitoring the pressure in a tyre
Procédé et dispositif pour la surveillance de la pression dans un pneumatique

(43) Veröffentlichungstag der Anmeldung: 12.11.2003
(73) Patentinhaber: Infineon Technologies AG, 85579 Neubiberg (DE)
(72) Erfinder: Von Wendorff, Wilhard Christophorus, Dr., 81251 München (DE)
(74) Vertreter: Repkow, Ines

(56) Entgegenhaltungen:
- US-A- 5 231 872

## Beschreibung

Die vorliegende Erfindung betrifft ein Verfahren gemäß dem Oberbegriff des Patentanspruchs 1, und eine Vorrichtung gemäß dem Oberbegriff des Patentanspruchs 9, d.h. ein Verfahren und eine Vorrichtung zur Überwachung des Druckes in einem Reifen.

Vorrichtungen zur Überwachung des Druckes in einem Reifen sind auch unter der Bezeichnung Reifendruck-Monitor bekannt.

US-A-5 231 872 offenbart ein Verfahren und eine Vorrichtung zur Überwachung des Druckes in einem Reifen im Einklang mit den Begriffen der jeweiligen **Oberbegriffe** von den Ansprüche 1 und 9.

Bei dem Reifen, dessen Druck überwacht werden soll, handelt es sich im betrachteten Beispiel um den Reifen eines Kraftfahrzeuges wie etwa eines Autos. In letzter Zeit werden verstärkt Anstrengungen unternommen, um den Reifendruck von Kraftfahrzeug-Reifen zu überwachen, weil ein Reifen, der zu wenig Luft hat oder Luft verliert, ein Sicherheitsrisiko darstellen kann.

Zur Überwachung des Reifendruckes existieren verschiedene Möglichkeiten.

Eine der Möglichkeiten besteht darin, daß die Überwachung unter Berücksichtigung des Umfanges des zu überwachenden Reifens erfolgt. Dem liegt die Erkenntnis zugrunde, daß ein Reifen mit geringem Reifendruck einen geringeren Reifenumfang aufweist als ein Reifen mit hohem Reifendruck, und daß sich ein Reifen mit geringem Umfang bei gleicher Kraftfahrzeug-Geschwindigkeit mit höherer Drehzahl dreht als ein Reifen mit größerem Reifenumfang.

Somit kann aus dem Umstand, daß die Drehzahl eines Reifens höher oder niedriger ist als die Drehzahl eines oder mehrerer anderer Reifen die Schlußfolgerung gezogen werden, daß ein oder mehrere Reifen keinen ordnungsgemäßen Reifendruck aufweisen.

Diese Art der Überwachung ist einerseits einfach realisierbar, weil die hierfür benötigten Sensoren in modernen Kraftfahrzeugen von Haus aus vorhanden sind. Andererseits läßt sich nicht oder nur mit unverhältnismäßig großem Aufwand erreichen, daß ein zu niedriger Reifendruck oder ein sinkender Reifendruck unter allen Umständen erkannt werden. Insbesondere ist es schwierig oder gar unmöglich, Zustände oder Veränderungen zu erfassen, die an mehreren oder allen Reifen gleichzeitig auftreten.

Deshalb erfolgt die Überwachung des Reifendruckes häufig dadurch, daß in den Reifen, genauer gesagt in den diese tragenden Felgen Drucksensoren vorgesehen werden, welche den absoluten Druck in den einzelnen Reifen erfassen. Dadurch läßt sich zwar eine hochgenaue und unter allen Umständen funktionierende Überwachung des Reifendruckes durchführen, doch kann das Vorsehen des Drucksensors und der weiteren Komponenten des Reifendruck-Monitors, die in der Felge unterzubringen sind, zu anderen Problemen führen.

Eines dieser Probleme besteht darin, daß die im Reifen oder in der Felge unterzubringenden Komponenten des Reifendruck-Monitors
- so groß sind, daß es schwierig ist, sie im Reifen oder in der Felge unterzubringen, und/oder
- so schwer sind, daß der Reifen dadurch eine Unwucht bekommt.

Die größte und schwerste Komponente der im Reifen oder in der Felge unterzubringenden Komponenten des Reifendruck-Monitors ist eine Batterie, durch welche die im Reifen oder in der Felge unterzubringenden Komponenten des Reifendruck-Monitors mit Energie versorgt werden.

Da diese Batterie nicht oder nur mit sehr großem Aufwand auswechselbar ist, muß sie eine so hohe Kapazität aufweisen, daß sie bis zum Ende der Nutzungsdauer des Kraftfahrzeuges, also mindestens 10 Jahre lang hält.

Da die Batterie aber andererseits aus den vorstehend genannten Gründen möglichst klein und leicht sein soll, muß nach Möglichkeiten gesucht werden, um den Energieverbrauch der von der Batterie mit Energie versorgten Komponenten möglichst gering zu halten. Eine bekannte und sehr wirkungsvolle Maßnahme hierfür besteht darin, daß der Druck des Reifens in Phasen, in welchen davon ausgegangen wird, daß sich der Reifen bewegt, in kürzeren zeitlichen Abständen gemessen wird als in Phasen, in welchen davon ausgegangen wird, daß sich der Reifen nicht bewegt.

Ob sich der zu überwachende Reifen bewegt oder nicht, kann durch einen im Reifen oder in der Felge untergebrachten Beschleunigungssensor wie beispielsweise einen Fliehkraftsensor festgestellt werden. Ein solcher Fliehkraftsensor hat jedoch ein nicht vernachlässigbares Gewicht und eine nicht vernächlässigbare Größe, so daß die durch den Fliehkraftsensor ermöglichte Verkleinerung der Batterie zumindest teilweise wieder zunichte gemacht wird.

Der vorliegenden Erfindung liegt daher die Aufgabe zugrunde, eine Möglichkeit zu finden, durch welche die Größe und das Gewicht der im Reifen oder der Felge unterzubringenden Komponenten des Reifendruck-Monitors auf ein Minimum reduzierbar sind.

Diese Aufgabe wird erfindungsgemäß durch das in Patentanspruch 1 beanspruchte Verfahren und die in Patentanspruch 12 beanspruchte Vorrichtung gelöst.

Das erfindungsgemäße Verfahren und die erfindungsgemäße Vorrichtung zeichnen sich dadurch aus, daß die Entscheidung, ob eine Messung des Reifendruckes durchzuführen ist, abhängig von der Größe der Veränderung eines Signals getroffen wird, das von einem Sensor ausgegeben wird, welcher den im Reifen herrschenden Druck oder die im Reifen herrschende Temperatur erfaßt.

Wenn ein Reifen Luft verliert, ändern sich zwangsläufig auch der im Reifen herrschende Druck und die im Reifen herrschende Temperatur . Folglich ist die Veränderung des im Reifen herrschenden Druckes oder der im Reifen herrschenden Temperatur ein zuverlässiges Anzeichen dafür, daß der Reifen Luft verlieren könnte. Die Veränderung des im Reifen herrschenden Druckes oder der im Reifen herrschenden Temperatur ist damit ein geeigneter Anlaß, um eine Messung des im Reifen herrschenden Druckes durchzuführen.

Die Erfassung der Veränderung des im Reifen herrschenden Druckes oder der im Reifen herrschenden Temperatur läßt sich sehr einfach und mit minimalem Energieverbrauch bewerkstelligen. Hierzu ist insbesondere keine Ermittlung des Absolutwertes des im Reifen herrschenden Druckes oder der im Reifen herrschenden Temperatur, also insbesondere keine Analog/Digitalwandlung des Sensor-Ausgangssignals erforderlich; es genügt, das Sensor-Ausgangssignal mit einem oder mehreren Schwellenwerten zu vergleichen.

Somit lassen sich durch das in Patentanspruch 1 beanspruchte Verfahren und die in Patentanspruch 12 beanspruchte Vorrichtung die Größe und das Gewicht der im Reifen oder in der Felge unterzubringenden Reifen-Monitor-Komponenten auf ein Minimum reduzieren.

Vorteilhafte Weiterbildungen der Erfindung sind den Unteransprüchen, der folgenden Beschreibung, und den Figuren entnehmbar.

Die Erfindung wird nachfolgend anhand von Ausführungsbeispielen unter Bezugnahme auf die Figuren näher erläutert. Es zeigen
- Figur 1: den Aufbau eines ersten Ausführungsbeispiels des im folgenden beschriebenen Reifendruck-Monitors, und
- Figur 2: den Aufbau eines zweiten Ausführungsbeispiels des im folgenden beschriebenen Reifendruck-Monitors.

Das im folgenden beschriebene Verfahren und die im folgenden beschriebene Vorrichtung sind Bestandteil eines Reifendruck-Monitors, bei welchem der Reifendruck unter Verwendung eines Drucksensors ermittelt wird, welcher zusammen mit bestimmten weiteren Komponenten des Reifendruck-Monitors im Reifen oder der den Reifen tragenden Felge untergebracht sind.

Es sei jedoch bereits an dieser Stelle darauf hingewiesen, daß die Besonderheiten des im folgenden beschriebenen Verfahrens und der im folgenden beschriebenen Vorrichtung auch in beliebigen anderen Reifendruck-Monitoren zum Einsatz kommen können, bei welchen es vorteilhaft ist, daß der Reifendruck-Monitor nur immer dann den eine quantitative Ermittlung des Reifendruckes oder einer auf den Reifendruck schließen lassenden Größe durchführt, wenn ein konkreter Anlaß dafür besteht.

Die Reifen, deren Druck durch das im folgenden beschriebene Verfahren und die im folgenden beschriebene Vorrichtung überwacht werden, sind die Reifen eines Kraftfahrzeuges wie beispielsweise eines Personenkraftwagens oder eines Lastkraftwagens. Durch das im folgenden beschriebene Verfahren und die im folgenden beschriebene Vorrichtung kann aber auch der Druck beliebiger anderer Reifen überwacht werden.

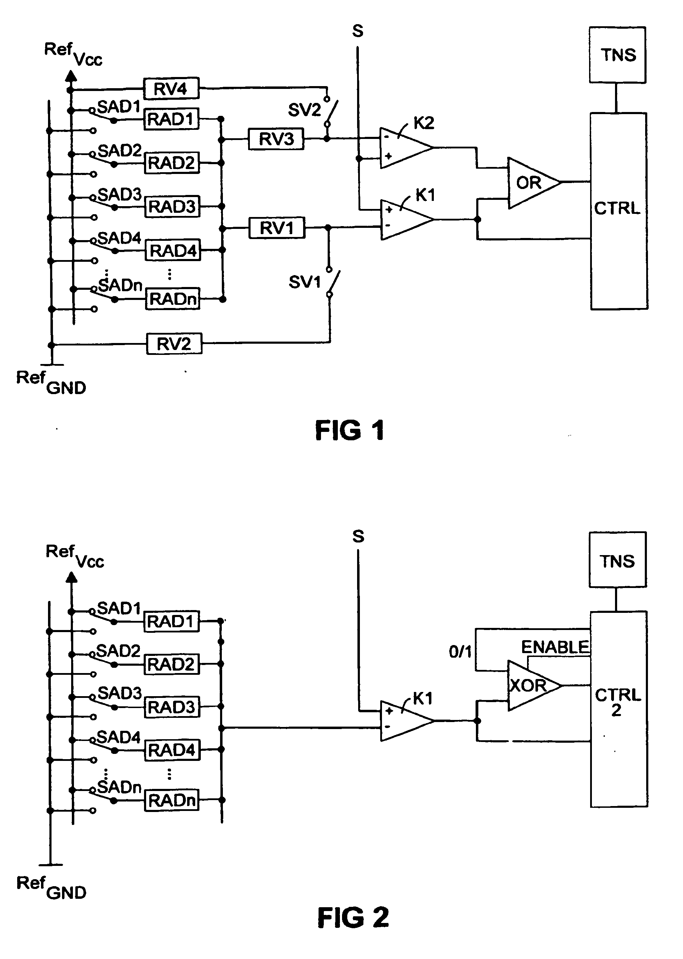

Die Komponenten des Reifendruck-Monitors, die im betrachteten Beispiel im Reifen oder der den Reifen tragenden Felge untergebracht sind, sind in Figur 1 dargestellt.

Die in der Figur 1 gezeigte Anordnung umfaßt einen Sensor S, Widerstände RAD1 bis RADn, und RV1 bis RV4, Schalter SAD1 bis SADn, und SV1 und SV2, Komparatoren K1 und K2, ein ODER-Gatter OR, eine Steuereinrichtung CTRL, sowie eine Sendevorrichtung TNS.

Die Widerstände RAD1 bis RADn, weisen jeweils einen ersten und einen zweiten Anschluß auf, wobei die ersten Anschlüsse über die Schalter SAD1 bis SADn unabhängig voneinander wahlweise mit einer oberen Referenzspannung REF_{Vcc} oder einer unteren Referenzspannung REF_{GND} verbindbar sind, und wobei die zweiten Anschlüsse miteinander verbunden sind. Die miteinander verbundenen zweiten Anschlüsse der Widerstände RAD1 bis RADn sind über den Widerstand RV1 mit einem ersten Eingangsanschluß des ersten Komparators K1, und über den Widerstand RV3 mit einem ersten Eingangsanschluß des zweiten Komparators K2 verbunden. Der erste Eingangsanschluß des ersten Komparators K1 ist ferner über den Schalter SV1 und dem dazu in Reihe geschalteten Widerstand RV2 mit der unteren Referenzspannung REF_{GND} verbunden; der erste Eingangsanschluß des zweiten Komparators K2 ist ferner über den Schalter SV2 und dem dazu in Reihe geschalteten Widerstand RV4 mit der oberen Referenzspannung REF_{Vcc} verbunden. Den zweiten Eingangsanschlüssen der Komparatoren K1 und K2 wird jeweils das (analoge) Ausgangssignal des Sensors S zugeführt. Die Komparatoren K1 und K2 vergleichen die ihnen zugeführten Signale und geben die Vergleichsergebnisse an das ODER-Gatter OR aus. Das ODER-Gatter OR unterzieht die ihm zugeführten Signale einer ODER-Operation und gibt das Ergebnis an die Steuereinrichtung CTRL aus. Der Steuereinrichtung CTRL wird ferner das Ausgangssignal des ersten Komparators K1 zugeführt. Die Steuereinrichtung CTRL führt abhängig von den ihr zugeführten Signalen bestimmte Operationen aus. Diese Operationen umfassen das Aktivieren und Deaktivieren der in der Figur 1 gezeigten Anordnung, die Steuerung der Schalter SAD1 bis SADn und SV1 bis SV4, sowie die drahtlose Übertragung von Signalen und Daten durch die Sendeeinrichtung TNS an ein externes (im Kraftfahrzeug untergebrachtes) Steuergerät. Welche Operationen wann ausgeführt werden, wird später noch genauer beschrieben.

Die Widerstände RAD1 bis RADn sind so dimensioniert, daß - für i = 1, 2 ... n - der Widerstand von RADi doppelt so groß ist wie der Widerstand von RADi-1.

Die Widerstände RV1 bis RV4 sind so dimensioniert, daß
- daß bei geöffneten Schaltern SV1 und SV2 an den Widerständen RV1 und RV3 keine oder nur eine vernachlässigbar geringe Spannung abfällt, so daß die den zweiten Eingangsanschlüssen der Komparatoren K1 und K2 zugeführte Spannung im wesentlichen die Spannung ist, die sich an den miteinander verbundenen zweiten Anschlüssen der Widerstände RAD1 bis RADn einstellt, und
- daß bei geschlossenen Schaltern SV1 und SV2 die dem zweiten Eingangsanschluß des Komparators K1 zugeführte Spannung in einem gewünschten Umfang nach unten gezogen wird, und die dem zweiten Eingangsanschluß des Komparators K2 zugeführte Spannung in einem gewünschten Umfang nach oben gezogen wird.

Im betrachteten Beispiel sind die Widerstände RV1 bis RV4 so dimensioniert, daß der Widerstand von RV1 und RV3 gleich dem Widerstand von RAD1 ist, und daß die Widerstände von RV2 und RV4 jeweils das 64-fache des Widerstandes von RAD1 betragen.

Es wird ausdrücklich darauf hingewiesen, daß es sich bei der erwähnten Dimensionierung der Widerstände nur um ein Beispiel handelt. Die Widerstände können prinzipiell auch beliebige andere Größenverhältnisse aufweisen.

Zu den Komponenten des Reifendruck-Monitors, die im betrachteten Beispiel im Reifen oder der den Reifen tragenden Felge untergebracht sind, gehört auch noch eine in der Figur 1 nicht gezeigte Batterie.

Die vorstehend erwähnten Komponenten des Reifendruck-Monitors sind in allen Reifen oder Felgen vorgesehen, deren Druck überwacht werden soll.

Die in der Figur 1 gezeigte Anordnung führt in bestimmten zeitlichen Abständen, welche im folgenden als erste zeitliche Abstände bezeichnet werden, Vergleiche durch, durch welche überprüft wird, ob sich das analoge Ausgangssignal des Sensors S innerhalb eines durch einen ersten Schwellenwert und einen zweiten Schwellenwert definierten Bereiches befindet. Die ersten zeitlichen Abstände sind im betrachteten Beispiel konstante zeitliche Abstände mit einer Länge von 1 Minute. Wie später noch genauer verstanden werden wird, besteht keine zwingende Notwendigkeit, daß die ersten zeitlichen Abstände konstant sind; darüber hinaus können sie auch kürzer oder länger als 1 Minute sein.

Die in der Figur 1 gezeigte Anordnung führt darüber hinaus in bestimmten zeitlichen Abständen, welche im folgenden als zweite zeitliche Abstände bezeichnet werden, eine Ermittlung des Druckes des Reifens durch, dessen Druck überwacht werden soll. Diese, im folgenden als erste Druckmessungen bezeichneten Druckmessungen bestehen jeweils aus einer Analog/Digital-Wandlung des vom Sensor S ausgegebenen analogen Signals. Auf der Grundlage dieser ersten Druckmessungen werden die Schwellenwerte aktualisiert, mit welchen bei den vorstehend erwähnten Vergleichen das analoge Ausgangssignal des Sensors verglichen wird. Die zweiten zeitlichen Abstände sind im betrachteten Beispiel konstante zeitliche Abstände mit einer Länge von 30 Minuten. Wie später noch genauer verstanden werden wird, besteht keine zwingende Notwendigkeit, daß die zweiten zeitlichen Abstände konstant sind; darüber hinaus können sie auch kürzer oder länger als 30 Minuten sein.

Wenn bei den vorstehend erwähnten Vergleichen festgestellt wird, daß das Ausgangssignal des Sensors S außerhalb des durch die Schwellenwerte definierten Bereiches liegt, wird ein im folgenden als Wake-Up-Signal erzeugtes Signal erzeugt, bei dessen Auftreten die Steuereinrichtung CTRL eine oder mehrere Druckmessungen veranlaßt und auswertet. Diese, im folgenden als zweite Druckmessungen bezeichneten Druckmessungen bestehen wie die vorstehend erwähnten ersten Druckmessungen jeweils aus einer Analog/Digital-Wandlung des vom Sensor S ausgegebenen analogen Signals. Die Steuereinrichtung wertet die Ergebnisse der zweiten Druckmessungen, und zwar nur die Ergebnisse der zweiten Druckmessungen, aus und entscheidet, ob Anhaltspunkte für einen nicht ordnungsgemäßen Reifendruck oder Reifendruck-Verlauf vorliegen. Ein nicht ordnungsgemäßer Reifendruck oder Reifendruckverlauf liegen insbesondere vor, wenn der Reifendruck zu niedrig oder zu hoch ist, oder wenn auf einen möglichen Reifendefekt zurückgehende Reifendruck-Veränderungen vorliegen. Die Steuereinrichtung CTRL berücksichtigt hierbei, daß sich bei fahrendem Kraftfahrzeug häufig ein Reifendruck oder eine Reifendruckveränderung einstellt, der bzw. die nur vorübergehender Natur ist und nicht auf einem zu behebenden fehlerhaften Zustand beruht; solche (nicht zu berücksichtigenden) Veränderungen des Reifendruckes stellen sich beispielsweise beim Überfahren von Unebenheiten oder bei Schwankungen der Umgebungstemperatur ein. Aus diesem Grund veranlaßt die Steuereinrichtung CTRL vorzugsweise mehrere, beispielsweise fünf zweite Druckmessungen; durch Auswertung dieser mehreren zweiten Messungen kann sie feststellen, ob ein nicht ordnungsgemäß erscheinender Reifendruck oder Reifendruckverlauf von dauerhafter Natur, also tatsächlich nicht ordnungsgemäß ist, oder nicht. Wenn die Steuereinrichtung CTRL bei der von ihr durchgeführten Überprüfung einen nicht ordnungsgemäßen Reifendruck oder Reifendruckverlauf feststellt, übermittelt sie über die Sendeeinrichtung TNS den nicht ordnungsgemäßen Reifendruck oder Reifendruckverlauf repräsentierende Daten und/oder sonstige Informationen an das vorstehend bereits erwähnte externe Steuergerät. Alternativ könnte vorgesehen werden, daß die Steuereinrichtung CTRL prinzipiell alle Ergebnisse der zweiten Druckmessungen an das externe Steuergerät sendet, und diesem die Auswertung der Meßergebnisse überläßt.

Der Analog/Digital-Wandler, der zur Durchführung der ersten und zweiten Reifendruckmessung verwendet wird, umfaßt im betrachteten Beispiel die Schalter SAD1 bis SADn, die Widerstände RAD1 bis RADn, den ersten Komparator K1, und einen Teil der Steuereinrichtung C. Es handelt sich um einen Analog/Digital-Wandler, der nach dem Prinzip der sukzessiven Approximation arbeitet. D.h., die Steuereinrichtung CTRL verändert die Stellung der Schalter SAD1 bis SADn so lange, bis die an den Eingangsanschlüssen des ersten Komparators K1 anliegenden Spannungen gleich oder nahezu gleich groß sind. Es sei jedoch bereits an dieser Stelle darauf hingewiesen, daß die Analog/Digital-Wandlung auch unter Verwendung eines beliebigen anderen Analog/Digital-Wandlers, beispielsweise unter Verwendung eines Sigma-Delta-Wandlers oder eines Spannungs/Frequenz-Umsetzers erfolgen könnte. Nach dem Abschluß der Analog/Digital-Wandlung werden die Schalter SAD1 bis SADn entweder in dem Zustand gehalten, in welchem sie sich bei Abschluß der Analog/Digital-Wandlung befanden, oder die betreffenden Schalterstellungen werden in der Steuereinrichtung CTRL gespeichert. Die Schalter SV1 und SV2 sind während der Durchführung der Analog/Digital-Wandlung geöffnet. Der nicht zum Analog/Digital-Wandler gehörende Widerstand RV1 beeinflußt die Analog/Digital-Wandlung nicht, weil über diesen wegen des hohen Eingangswiderstandes des Komparators K1 kein oder nur ein vernachlässigbar geringer Strom fließt, und folglich auch keine oder nur eine vernachlässigbar geringe Spannung an diesem abfällt.

Zur Durchführung der vorstehend erwähnten Vergleiche werden der Analog/Digital-Wandler und zusätzlich die Schalter SV1 und SV2, die Widerstände RV1 bis RV4, der Komparator K2, und das ODER-Gatter OR benötigt. Bei den Vergleichen haben die Schalter SAD1 bis SADn die Stellung inne, die sie am Ende der zuletzt durchgeführten Analog/Digital-Wandlung innehatten, und sind die Schalter SV1 und SV2 geschlossen. Durch die geschlossenen Schalter SV1 und SV2 wird erreicht, daß die Spannungen, die an den ersten Eingangsanschlüssen der Komparatoren K1 und K2 anliegen, höher bzw. niedriger sind als es der Fall ist, wenn die Schalter (wie bei der Durchführung einer Analog/Digital-Wandlung) geöffnet sind. Genauer gesagt ist es so, daß die dem ersten Eingangsanschluß des zweiten Komparators K2 zugeführte Spannung durch den als Pull-Up-Widerstand wirkenden Widerstand RV4 erhöht wird, und daß die dem ersten Eingangsanschluß des ersten Komparators K1 zugeführte Spannung durch den als Pull-Down-Widerstand wirkenden Widerstand RV2 verringert wird. Die dem ersten Eingangsanschluß des Komparators K2 zugeführte Spannung ist die vorstehend bereits erwähnte erste Schwellenspannung, und die dem ersten Eingangsanschluß des Komparators K1 zugeführte Spannung ist die vorstehend ebenfalls bereits erwähnte zweite Schwellenspannung. Der Komparator K2 vergleicht die analoge Ausgangsspannung des Sensors S mit der ersten Schwellenspannung und gibt eine einen hohen Pegel repräsentierende Spannung aus, wenn die analoge Ausgangsspannung des Sensors S größer als die erste Schwellenspannung ist. Der Komparator K1 vergleicht die analoge Ausgangsspannung des Sensors S mit der zweiten Schwellenspannung und gibt eine einen hohen Pegel repräsentierende Spannung aus, wenn die analoge Ausgangsspannung des Sensors S kleiner als die zweite Schwellenspannung ist. Das den Komparatoren K1 und K2 nachgeschaltete ODER-Gatter OR gibt eine einen hohen Pegel repräsentierende Spannung aus, wenn die analoge Ausgangsspannung des Sensors S größer als die erste Schwellenspannung oder kleiner als die zweite Schwellenspannung ist, also wenn die analoge Ausgangsspannung des Sensors S außerhalb eines durch die erste Schwellenspannung und durch die zweite Schwellenspannung definierten Bereiches liegt. Das Ausgangssignal des ODER-Gatters OR ist das vorstehend bereits erwähnte Wake-Up-Signal. Wenn das Wake-Up-Signal eine einen hohen Pegel repräsentierende Spannung innehat, weckt sie den Teil der Steuereinrichtung C auf, der für die Veranlassung, Auswertung und Versendung der zweiten Druckmessungen zuständig ist; dieser Teil der Steuereinrichtung C befindet sich normalerweise in einem Sleep-Mode, in welchem er keine oder besonders wenig Energie verbraucht. Wenn und so lange das Wake-Up-Signal eine einen niedrigen Pegel repräsentierende Spannung innehat, bleibt der betreffende Teil der Steuereinrichtung C im Sleep-Mode.

Durch die regelmäßig stattfindenden ersten Druckmessungen werden die Schwellenspannungen an die jeweils herrschenden Bedingungen angepaßt. Dadurch kann verhindert werden, daß das Wake-Up-Signal auch schon dann erzeugt wird, wenn sich die äußeren Bedingungen ändern. Beispielsweise wird kein Wake-Up-Signal erzeugt, wenn der Reifendruck aufgrund eines Anstieges der Außentemperatur oder der Fahrbahn-Temperatur allmählich ansteigt.

Die Schwellenspannungen sind vorzugsweise jedoch so festgelegt, daß bei Überfahren von Fahrbahn-Unebenheiten ein Wake-Up-Signal erzeugt wird.

Es können zusätzlich auch die zweiten Druckmessungen zur Anpassung der Schwellenspannungen herangezogen werden. Unter Umständen erweist es sich sogar als vorteilhaft, wenn nur die zweiten Druckmessungen zur Anpassung der Schwellenwerte herangezogen werden; in diesem Fall könnte auf die Durchführung der ersten Druckmessungen verzichtet werden.

In den Phasen, in welchen weder eine erste oder zweite Druckmessung noch ein Vergleich durchgeführt wird, werden vorzugsweise alle Komponenten der in der Figur 1 gezeigten Anordnung, die in diesen Phasen nicht benötigt werden, deaktiviert oder zumindest in eine Betriebsart versetzt, in welcher sie möglichst wenig Energie verbrauchen. Dies kann beispielsweise dadurch geschehen, daß die Versorgungsspannugen für diese Komponenten von der Versorgungsspannungsquelle getrennt werden. Dies gilt auch für die jeweils nicht benötigten Komponenten der Steuereinrichtung CTRL. In diesem Zusammenhang sei angemerkt, daß die Steuereinrichtung CTRL vorzugsweise aus unabhängig voneinander betreibbaren Modulen besteht, wobei diese Module Bestandteil eines einzigen oder verschiedener Bauteile (Chips) sein können.

Wie aus den vorstehenden Erläuterungen hervorgeht, können zumindest große Teil der in der Figur 1 gezeigten Anordnung sowohl bei fahrendem Kraftfahrzeug als auch bei stehendem Fahrzeug inaktiv sein. Selbst die Operationen der Anordnung, die am häufigsten durchgeführt werden, nämlich die Vergleiche, werden nur in mehr oder weniger großen zeitlichen Abständen durchgeführt, und verbrauchen zudem relativ wenig Energie, jedenfalls erheblich weniger Energie als die Durchführung einer Analog/Digital-Wandlung. Die mehr Energie benötigenden Analog/Digital-Wandlungen werden noch viel seltener ausgeführt als die Vergleiche, und insbesondere auch viel seltener als bei herkömmlichen Reifendruck-Monitoren; bei herkömmlichen Reifendruck-Monitoren werden bei fahrendem Kraftfahrzeug ohne oder in nur sehr kurzen zeitlichen Abständen ständig Analog/Digital-Wandlungen durchgeführt.

Obwohl der vorstehend beschriebene Reifendruck-Monitor sehr viel weniger Energie verbraucht als herkömmliche Reifendruck-Monitore, kann dieser sogar bei stehendem Kraftfahrzeug einen nicht ordnungsgemäßen Reifendruck oder Reifendruckverlauf erkennen. Dies ist deshalb möglich, weil die erwähnten Vergleiche auch bei stehendem Fahrzeug durchgeführt werden, und folglich - nach Auftreten eines Wake-Up-Signals - auch bei stehendem Kraftfahrzeug die Durchführung und Auswertung einer Reifendruckmessung veranlaßt werden kann. Dadurch ist es beispielsweise möglich, das Aufstechen eines Reifens zu erkennen, und im Ansprechen darauf die Alarmanlage auszulösen. Bei herkömmlichen Reifendruck-Monitoren ist dies nicht möglich, weil bei diesen Reifendruckmessungen nur dann durchgeführt werden, wenn sich das Kraftfahrzeug bewegt.

Es dürfte einleuchten, daß der vorstehend beschriebene Reifendruck-Monitor auch anders als durch die in der Figur 1 gezeigte Anordnung realisierbar ist. Eine der möglichen Varianten ist in Figur 2 gezeigt.

Die in der Figur 2 gezeigte Anordnung besteht nur aus einem Analog/Digital-Wandler, einem XOR-Gatter XOR, einer Steuereinrichtung CTRL2, und einer Sendeeinrichtung TNS, wobei der Analog/Digital-Wandler aus Schaltern SAD1 bis SADn, Widerständen RAD1 bis RADn und einem Komparator K1 besteht.

Die Komponenten der in der Figur 2 gezeigten Anordnung, die mit in der Figur 1 verwendeten Bezugszeichen versehen sind, sind identische oder einander entsprechende Komponenten.

Durch die in der Figur 2 gezeigte Anordnung werden wie durch die in der in der Figur 1 gezeigte Anordnung in bestimmten zeitlichen Abständen bzw. im Ansprechen auf bestimmte Ereignisse Vergleiche und erste und zweite Druckmessungen durchgeführt. Diesbezüglich besteht kein Unterschied zu der in der Figur 1 gezeigten Anordnung. Unterschiedlich ist "nur" die Art und Weise, auf welche die Vergleiche durchgeführt werden und das Wake-Up-Signal erzeugt wird.

Der Vergleich des analogen Ausgangssignals des Sensors S mit der oberen Schwellenspannung und der Vergleich des analogen Ausgangssignals des Sensors S mit der unteren Schwellenspannung erfolgt in aufeinanderfolgenden Schritten durch den Komparator K1.

In beiden Fällen werden die Schwellenspannungen durch eine entsprechende Ansteuerung der Schalter SAD1 bis SADn erzeugt. Ausgangspunkt hierbei sind die Schalterstellungen, die die Schalter SAD1 bis SADn am Ende der jeweils zuletzt durchgeführten Analog/Digital-Wandlung innehatten.

Diese Schalterstellungen werden während des Vergleichs des analogen Ausgangssignal des Sensors S mit der ersten Schwellenspannung dahingehend verändert, daß die Spannung, die sich an den miteinander verbundenen zweiten Anschlüssen der Widerstände RAD1 bis RADn einstellt, um einen bestimmten Betrag höher ist als es ohne die Schalterstellungs-Modifikation der Fall wäre. Durch eine Schalterstellungs-Modifikation, durch welche die Summe der Widerstände, deren erster Anschluß mit der oberen Referenzspannung Ref_{Vcc} verbunden ist, um den Widerstand von RV4 der in der Figur 1 gezeigten Anordnung größer wird, kann erreicht werden, daß dem Komparator K1 etwa die gleiche Schwellenspannung zugeführt wird wie dem Komparator K2 der in der Figur 1 gezeigten Anordnung.

Entsprechendes gilt für den Vergleich des analogen Ausgangssignals des Sensors S mit der zweiten Schwellenspannung. In diesem Fall werden die Stellungen der Schalter SAD1 bis SADn dahingehend verändert, daß die Spannung, die sich an den miteinander verbundenen zweiten Anschlüssen der Widerstände RAD1 bis RADn einstellt, um einen bestimmten Betrag niedriger ist als es ohne die Schalterstellungs-Modifikation der Fall wäre. Durch eine Schalterstellungs-Modifikation, durch welche die Summe der Widerstände, deren erster Anschluß mit der unteren Referenzspannung Ref_{GND} verbunden ist, um den Widerstand von RV2 der in der Figur 1 gezeigten Anordnung größer wird, kann erreicht werden, daß dem Komparator K1 etwa die gleiche Schwellenspannung zugeführt wird wie dem Komparator K1 der in der Figur 1 gezeigten Anordnung.

Wie die Schalter SAD1 bis SADn für eine solche Schwellenwerterzeugung anzusteuern sind, dürfte klar sein und bedarf keiner näheren Erläuterung. Die Ansteuerung der Schalter SAD1 bis SADn erfolgt durch die Steuereinrichtung CTRL2.

Im betrachteten Beispiel ist es so, daß bei der Durchführung eines Vergleichs die analoge Ausgangsspannung des Sensors S zunächst mit der ersten Schwellenspannung verglichen wird. Hierzu werden die Schalter SAD1 bis SADn so angesteuert, daß dem Komparator K1 die erste Schwellenspannung zugeführt wird. Darüber hinaus wird dem nicht mit dem Komparator K1 verbundenen Eingangsanschluß des XOR-Gatters XOR durch die Steuereinrichtung CTRL2 eine einen niedrigen Pegel (0) repräsentierende Spannung zugeführt. Der Komparator K1 gibt wie der den entsprechenden Vergleich durchführende Komparator K2 der Anordnung gemäß Figur 1 eine einen niedrigen Pegel repräsentierende Spannung aus, wenn die analoge Ausgangsspannung des Sensors S kleiner ist als die erste Schwellenspannung, und gibt eine einen hohen Pegel repräsentierende Spannung aus, wenn die analoge Ausgangsspannung des Sensors S größer ist als die erste Schwellenspannung. Wenn der Komparator K1 eine einen niedrigen Pegel repräsentierende Spannung ausgibt, gibt das XOR-Gatter XOR ebenfalls eine einen niedrigen Pegel repräsentierende Spannung aus. Da das Ausgangssignal des XOR-Gatters XOR bei der in der Figur 2 gezeigten Anordnung das Wake-Up-Signal ist, werden in diesem Fall keine zweiten Druckmessungen veranlaßt und ausgewertet. Anderenfalls, d.h. wenn der Komparator K1 eine einen hohen Pegel repräsentierende Spannung ausgibt, gibt das XOR-Gatter XOR ebenfalls eine einen hohen Pegel repräsentierende Spannung aus. Daraufhin werden durch die Steuereinrichtung CTRL2 eine oder mehrere zweite Druckmessungen veranlaßt und ausgewertet.

Im Anschluß an den Vergleich des analogen Ausgangssignals des Sensors S mit der ersten Schwellenspannung wird die analoge Ausgangsspannung des Sensors S mit der zweiten Schwellenspannung verglichen. Hierzu werden die Schalter SAD1 bis SADn so angesteuert, daß dem Komparator K1 die zweite Schwellenspannung zugeführt wird. Darüber hinaus wird dem nicht mit dem Komparator K1 verbundenen Eingangsanschluß des XOR-Gatters XOR durch die Steuereinrichtung C1 eine einen hohen Pegel (1) repräsentierende Spannung zugeführt. Der Komparator K1 gibt eine einen niedrigen Pegel repräsentierende Spannung aus, wenn die analoge Ausgangsspannung des Sensors S kleiner ist als die zweite Schwellenspannung, und gibt eine einen hohen Pegel repräsentierende Spannung aus, wenn die analoge Ausgangsspannung des Sensors S größer ist als die zweite Schwellenspannung. Wenn der Komparator K1 eine einen hohen Pegel repräsentierende Spannung ausgibt, gibt das XOR-Gatter XOR eine einen niedrigen Pegel repräsentierende Spannung aus, wodurch in diesem Fall keine zweiten Druckmessungen veranlaßt und ausgewertet werden. Anderenfalls, d.h. wenn der Komparator K1 eine einen niedrigen Pegel repräsentierende Spannung ausgibt, gibt das XOR-Gatter XOR eine einen hohen Pegel repräsentierende Spannung aus. Daraufhin werden durch die Steuereinrichtung C2 eine oder mehrere zweite Druckmessungen veranlaßt und ausgewertet.

Damit verhält sich die in der Figur 2 gezeigte Anordnung im Ergebnis exakt so, wie es bei der in der Figur 1 gezeigten Anordnung der Fall ist. Die in der Figur 2 gezeigte Anordnung ist jedoch kleiner realisierbar als die in der Figur 1 gezeigte Anordnung.

Bei den vorstehend beschriebenen Reifendruck-Monitoren wurde bei den Vergleichen überprüft, ob das Ausgangssignal eines Drucksensors innerhalb eines durch die Schwellenspannungen definierten Bereiches befindet. Hierauf besteht jedoch keine Einschränkung. Es könnte statt dessen vorgesehen werden, daß überprüft wird, ob das analoge Ausgangssignal eines Temperatursensors, welcher die im Reifen herrschende Temperatur erfaßt, innerhalb eines durch Schwellenspannungen definierten Bereiches liegt. Veränderungen des im Reifen herrschenden Druckes haben automatisch eine Veränderung der im Reifen herrschenden Temperatur zur Folge, so daß der Vergleich des analogen Ausgangssignals eines Drucksensors mit einem oder mehreren Schwellenwerten und der Vergleich des analogen Ausgangssignals eines Temperatursensors mit einem oder mehreren Schwellenwerten gleichwertige Alternativen sind.

Es besteht auch keine zwingende Notwendigkeit, daß überprüft wird, ob das analoge Ausgangssignal des Druck- oder Temperatursensors innerhalb eines durch zwei Schwellenwerte definierten Bereiches liegt. Es kann auch vorgesehen werden, mit nur einem Schwellenwert zu arbeiten, und eine (zweite) Druckmessung zu veranlassen, wenn das analoge Ausgangssignal des Druck- oder Temperatursensors diesen Schwellenwert unterschreitet.

Durch das vorstehend beschriebene Verfahren und die vorstehend beschriebene Vorrichtung ist es unabhängig von den Einzelheiten der praktischen Realisierung möglich, die Größe und das Gewicht der im Reifen oder der Felge unterzubringenden Komponenten eines Reifendruck-Monitors auf ein Minimum zu reduzieren.

### Bezugszeichenliste

- CTRL: Steuereinrichtung
- Kx: Komparator
- OR: ODER-Gatter
- RADx: Widerstand
- REFx: Referenzspannung
- RVx: Widerstand
- S: Sensor
- SADx: Schalter
- SVx: Schalter
- TNS: Sendevorrichtung
- XOR: XOR-Gatter

## Patentansprüche

1. Verfahren zur Überwachung des Druckes in einem Reifen, wobei die Entscheidung, ob eine Messung des Reifendruckes durchzuführen ist, abhängig von der Größe der Veränderung eines Signals (S) getroffen wird, das von einem Sensor ausgegeben wird, welcher den im Reifen herrschenden Druck oder die im Reifen herrschende Temperatur erfaßt, wobei das Sensor-Ausgangssignal (S) ein analoges Signal ist,
**dadurch gekennzeichnet,**
**daß** die Größe der Veränderung des Sensor-Ausgangssignals (S) durch einen Vergleich des Sensor-Ausgangssignals (S) mit einem oder mehreren Schwellenwerten ermittelt wird, wobei der mindestens eine Schwellenwert ein analoges Signal ist, und durch den Vergleich das analoge Sensor-Ausgangssignal (S) und der analoge Schwellenwert miteinander verglichen werden.

2. Verfahren nachAnspruch 1,
**dadurch gekennzeichnet,**
**daß** eine Messung des Reifendruckes durchgeführt wird, wenn das Sensor-Ausgangssignal (S) einen bestimmten Schwellenwert übersteigt.

3. Verfahren nach einem der vorhergehenden Ansprüche,
**dadurch gekennzeichnet,**
**daß** eine Messung des Reifendruckes durchgeführt wird, wenn das Sensor-Ausgangssignal (S) einen bestimmten Schwellenwert unterschreitet.

4. Verfahren nach einem der vorhergehenden Ansprüche,
**dadurch gekennzeichnet,**
**daß** der mindestens eine Schwellenwert in regelmäßigen oder unregelmäßigen Abständen aktualisiert wird.

5. Verfahren nach einem der vorhergehenden Ansprüche,
**dadurch gekennzeichnet,**
**daß** die Festlegung des mindestens einen Schwellenwertes unter Berücksichtigung des Ergebnisses der jeweils letzten Messung des im Reifen herrschende Druckes oder der im Reifen herrschenden Temperatur erfolgt.

6. Verfahren nach einem der vorhergehenden Ansprüche,
**dadurch gekennzeichnet,**
**daß** eine Messung des im Reifen herrschende Druckes oder der im Reifen herrschenden Temperatur auch dann durchgeführt wird, wenn der mindestens eine Schwellenwert aktualisiert werden muß.

7. Verfahren nach Anspruch 4,
**dadurch gekennzeichnet,**
**daß** die zeitlichen Abstände, in welchen Aktualisierungen des mindestens einen Schwellenwertes erfolgen, größer sind als die zeitlichen Abstände, in welchen die Größe der Veränderung des Sensor-Ausgangssignals (S) ermittelt wird.

8. Verfahren nach einem der vorhergehenden Ansprüche,
**dadurch gekennzeichnet,**
**daß** die Messung des Reifendruckes eine Analog/Digital-Wandlung des von einem Reifendruck-Sensor ausgegebenen Signals (S) umfaßt.

9. Vorrichtung zur Überwachung des Druckes in einem Reifen, wobei die Vorrichtung die Entscheidung, ob eine Messung des Reifendruckes durchzuführen ist, abhängig von der Größe der Veränderung eines Signals (S) trifft, das von einem Sensor ausgegeben wird, welcher den im Reifen herrschenden Druck oder die im Reifen herrschende Temperatur erfaßt, wobei das Sensor-Ausgangssignal (S) ein analoges Signal ist,
**dadurch gekennzeichnet,**
**daß** die Vorrichtung die Größe der Veränderung des Sensor-Ausgangssignals (S) durch einen Vergleich des Sensor-Ausgangssignals (S) mit einem oder mehreren Schwellenwerten ermittelt, wobei der mindestens eine Schwellenwert ein analoges Signal ist, und durch den Vergleich das analoge Sensor-Ausgangssignal (S) und der analoge Schwellenwert miteinander verglichen werden.

10. Vorrichtung nach Anspruch 9,
**dadurch gekennzeichnet,**
**daß** die Vorrichtung eine Messung des Reifendruckes durchführt, wenn das Sensor-Ausgangssignal (S) einen bestimmten Schwellenwert übersteigt.

11. Vorrichtung nachAnspruch 9 oder 10,
**dadurch gekennzeichnet,**
**daß** die Vorrichtung eine Messung des Reifendruckes durchführt, wenn das Sensor-Ausgangssignal (S) einen bestimmten Schwellenwert unterschreitet.

12. Vorrichtung nach einem der Ansprüche 9 bis 11,
**dadurch gekennzeichnet,**
**daß** die Vorrichtung den mindestens einen Schwellenwert in regelmäßigen oder unregelmäßigen Abständen aktualisiert.

13. Vorrichtung nach einem der Ansprüche 9 bis 12,
**dadurch gekennzeichnet,**
**daß** die Vorrichtung den mindestens einen Schwellenwert unter Berücksichtigung des Ergebnisses der jeweils letzten Messung des im Reifen herrschende Druckes oder der im Reifen herrschenden Temperatur festlegt.

14. Vorrichtung nach einem der Ansprüche 9 bis 13,
**dadurch gekennzeichnet,**
**daß** die Vorrichtung eine Messung des im Reifen herrschende Druckes oder der im Reifen herrschenden Temperatur auch dann durchführt, wenn der mindestens eine Schwellenwert aktualisiert werden muß.

15. Vorrichtung nach Anspruch 12,
**dadurch gekennzeichnet,**
**daß** die zeitlichen Abstände, in welchen Aktualisierungen des mindestens einen Schwellenwertes erfolgen, größer sind als die zeitlichen Abstände, in welchen die Größe der Veränderung des Sensor-Ausgangssignals (S) ermittelt wird.

16. Vorrichtung nach einem der Ansprüche 9 bis 15,
**dadurch gekennzeichnet,**
**daß** die Messung des Reifendruckes eine Analog/Digital-Wandlung des von einem Reifendruck-Sensor ausgegebenen Signals (S) umfaßt.

## Claims

1. Method for monitoring the pressure in a tire, wherein the decision as to whether the tire pressure is to be measured is taken as a function of the magnitude of the change in a signal(s) which is output by a sensor which senses the pressure prevailing in the tire or the temperature prevailing in the tire, wherein the sensor output signal(s) is an analog signal, **characterized in that** the magnitude of the change in the sensor output signal(s) is determined by means of a comparison of the sensor output signal(s) with one or more threshold values, wherein the at least one threshold value is an analog signal and, by means of the comparison, the analog sensor output signal(s) and the analog threshold value are compared with one another.

2. Method according to Claim 1, **characterized in that** the tire pressure is measured if the sensor output signal(s) exceeds a specific threshold value.

3. Method according to one of the preceding claims, **characterized in that** the tire pressure is measured if the sensor output signal(s) drops below a specific threshold value.

4. Method according to one of the preceding claims, **characterized in that** the at least one threshold value is updated at regular or irregular intervals.

5. Method according to one of the preceding claims, **characterized in that** the at least one threshold value is defined taking into account the result of the respective last measurement of the pressure prevailing in the tire or the temperature prevailing in the tire.

6. Method according to one of the preceding claims, **characterized in that** the pressure prevailing in the tire or the temperature prevailing in the tire is also measured if the at least one threshold value has to be updated.

7. Method according to Claim 4, **characterized in that** the time intervals at which updating of the at least one threshold value takes place are longer than the time intervals at which the magnitude of the change in the sensor output signal(s) is determined.

8. Method according to one of the preceding claims, **characterized in that** the measurement of the tire pressure comprises an analog/digital conversion of the signal(s) which is output by a tire pressure sensor.

9. Device for monitoring the pressure in a tire, wherein the decision as to whether the tire pressure is to be measured is taken by the device as a function of the magnitude of the change in the signal(s) which is output by a sensor which senses the pressure prevailing in the tire or the temperature prevailing in the tire, wherein the sensor output signal(s) is an analog signal, **characterized in that** the device determines the magnitude of the change in the sensor output signal(s) by means of a comparison of the sensor output signal(s) with one or more threshold values, wherein the at least one threshold value is an analog signal and, by means of the comparison, the analog sensor output signal(s) and the analog threshold value are compared with one another.

10. Device according to Claim 9, **characterized in that** the device measures the tire pressure if the sensor output signal(s) exceeds a specific threshold value.

11. Device according to Claim 9 or 10, **characterized in that** the device measures the tire pressure if the sensor output signal(s) drops below a specific threshold value.

12. The device according to one of Claims 9 to 11, **characterized in that** the device updates the at least one threshold value at regular or irregular intervals.

13. Device according to one of Claims 9 to 12, **characterized in that** the device defines the at least one threshold value taking into account the result of the respective last measurement of the pressure prevailing in the tire or the temperature prevailing in the tire.

14. Device according to one of Claims 9 to 13, **characterized in that** the device measures the pressure prevailing in the tire or the temperature prevailing in the tire even if the at least one threshold value has to be updated.

15. Device according to Claim 12, **characterized in that** the time intervals at which updating of the at least one threshold value takes place are longer than the time intervals at which the magnitude of the change in the sensor output signal(s) is determined.

16. Device according to one of Claims 9 to 15, **characterized in that** the measurement of the tire pressure includes an analog/digital conversion of the signal(s) which is output by a tire pressure sensor.

## Revendications

1. Procédé pour contrôler la pression dans un pneu, la décision de savoir si une mesure de la pression de gonflage doit être effectuée étant prise en fonction de la grandeur de la variation d'un signal (S), qui est émis par un capteur, lequel détecte la pression régnant dans le pneu ou la température régnant dans le pneu, le signal de sortie du capteur (S) étant un signal analogique,
**caractérisé en ce que**
la grandeur de la variation du signal de sortie du capteur (S) est déterminée par une comparaison du signal de sortie du capteur (S) avec une ou plusieurs valeurs seuils, l'au moins une valeur seuil étant un signal analogique, et le signal analogique de sortie du capteur (S) et la valeur de seuil analogique étant comparés l'un avec l'autre par la comparaison.

2. Procédé selon la revendication 1,
**caractérisé en ce**
**qu'**une mesure de la pression de gonflage est effectuée lorsque le signal de sortie du capteur (S) dépasse une valeur seuil définie.

3. Procédé selon l'une des revendications précédentes,
**caractérisé en ce**
**qu'**une mesure de la pression de gonflage est effectuée lorsque le signal de sortie du capteur (S) est inférieur à une valeur seuil définie.

4. Procédé selon l'une des revendications précédentes,
**caractérisé en ce que**
l'au moins une valeur seuil est mise à jour à des intervalles réguliers ou irréguliers.

5. Procédé selon l'une des revendications précédentes,
**caractérisé en ce que**
l'établissement de l'au moins une valeur seuil s'effectue en tenant compte du résultat de la dernière mesure respective de la pression régnant dans le pneu ou de la température régnant dans le pneu.

6. Procédé selon l'une des revendications précédentes,
**caractérisé en ce**
**qu'**une mesure de la pression régnant dans le pneu ou de la température régnant dans le pneu est effectuée même dans le cas où l'au moins une valeur seuil doit être mise à jour.

7. Procédé selon la revendication 4,
**caractérisé en ce que**
les intervalles de temps, pendant lesquels des mises à jour de l'au moins une valeur seuil sont effectuées, sont supérieurs aux intervalles de temps pendant lesquels la grandeur de la variation du signal de sortie du capteur (S) est déterminée.

8. Procédé selon l'une des revendications précédentes,
**caractérisé en ce que**
la mesure de la pression de gonflage comprend une conversion analogique/numérique du signal (S) émis par un capteur de pression de pneu.

9. Dispositif pour contrôler la pression dans un pneu, le dispositif prenant la décision de savoir si une mesure de la pression de gonflage doit être effectuée en fonction de la grandeur de la variation d'un signal (S) qui est émis par un capteur, lequel détecté la pression régnant dans le pneu ou la température régnant dans le pneu, le signal de sortie du capteur (S) étant un signal analogique,
**caractérisé en ce que**
le dispositif détermine la grandeur de la variation du signal de sortie du capteur (S) par une comparaison du signal de sortie du capteur (S) avec une ou plusieurs valeurs seuils, l'au moins une valeur seuil étant un signal analogique, et le signal analogique de sortie du capteur (S) et la valeur seuil analogique étant comparés l'un avec l'autre par la comparaison.

10. Dispositif selon la revendication 9,
**caractérisé en ce que**
le dispositif effectue une mesure de la pression de gonflage lorsque le signal de sortie du capteur (S) dépasse une valeur seuil définie.

11. Dispositif selon la revendication 9 ou 10,
**caractérisé en ce que**
le dispositif effectue une mesure de la pression de gonflage lorsque le signal de sortie du capteur (S) est inférieur à une valeur seuil définie.

12. Dispositif selon l'une des revendications 9 à 11,
**caractérisé en ce que**
le dispositif met à jour l'au moins une valeur seuil à des intervalles réguliers ou irréguliers.

13. Dispositif selon l'une des revendications 9 à 12,
**caractérisé en ce que**
le dispositif définit l'au moins une valeur seuil en tenant compte du résultat de la dernière mesure respective de la pression régnant dans le pneu ou de la température régnant dans le pneu.

14. Dispositif selon l'une des revendications 9 à 13,
**caractérisé en ce que**
le dispositif effectue une mesure de la pression régnant dans le pneu ou de la température régnant dans le pneu même dans le cas où l'au moins une valeur seuil doit être mise à jour.

15. Dispositif selon la revendication 12,
**caractérisé en ce que**
les intervalles de temps, pendant lesquels ont lieu des mises à jour de l'au moins une valeur seuil, sont supérieurs aux intervalles de temps pendant lesquels la grandeur de la variation du signal de sortie du capteur (S) est déterminée.

16. Dispositif selon l'une des revendications 9 à 15,
**caractérisé en ce que**
la mesure de la pression de gonflage comprend une conversion analogique/numérique du signal (S) émis par un capteur de pression de gonflage.
